# EUROPEAN PATENT APPLICATION

(11) **EP 4 664 632 A1**
(43) Date of publication of application: **17.12.2025**
(21) Application number: 24222853.4
(22) Date of filing: 23.12.2024
(51) Int. Cl.: H01M 50/209, H01M 50/262, H01M 50/271, H01M 50/103, H01M 50/184

(54) **BATTERY PACK**

(30) Priority: 12.06.2024 KR 20240076336
(71) Applicant: Samsung SDI Co., Ltd., Gyeonggi-do 17084 (KR)
(72) Inventor: Cho, Man Sik, Suwon-si, Gyeonggi-do 16678 (KR); Hong, Seong Pyo, Suwon-si, Gyeonggi-do 16678 (KR)
(74) Representative: Gulde & Partner

(57) **Abstract**

A battery pack includes a battery cell assembly including one or more battery cells, a case in which at least a portion of the battery cell assembly is accommodated, the case including a first groove and a second groove, a cover coupled to the case, and a sealing member between the case and the cover, a portion of the sealing member being located in the first groove and the second groove.

## Description

### BACKGROUND

### 1. Field

Aspects of embodiments of the present disclosure relates to a battery pack.

### 2. Discussion of Related Art

In general, secondary batteries are capable of charging and discharging, unlike primary batteries that cannot be charged. Low-capacity secondary batteries may be used in small portable electronic devices such as smartphones, feature phones, notebook computers, digital cameras, and camcorders, and large-capacity secondary batteries are widely used as power sources for driving motors of hybrid vehicles, electric vehicles, and the like, and as batteries for power storage. Such a secondary battery includes an electrode assembly including a positive electrode and a negative electrode, a case for accommodating the electrode assembly, an electrode terminal connected to the electrode assembly, and the like.

Secondary batteries may be used as a battery pack formed of a plurality of unit battery cells connected in series and/or parallel to provide high energy density. The battery pack may be formed by connecting electrode terminals of a plurality of unit batteries to satisfy the required power, for example, to implement a high-power secondary battery of an electric vehicle.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, a battery pack in which airtightness between a case and a cover is improved is provided.

The above and other aspects and features of the present disclosure will be described in or will be apparent from the following description of some embodiments of the present disclosure.

According to one or more embodiments of the present disclosure, a battery pack includes a battery cell assembly including one or more battery cells, a case in which at least a portion of the battery cell assembly is accommodated, the case including a first groove and a second groove, a cover coupled to the case, and a sealing member between the case and the cover, a portion of the sealing member being located in the first groove and the second groove. In other words, the sealing member may be partially located in the first groove and in the second groove at the same time.

The case may include a case body and a first coupling part at an edge of the case body and coupled to the cover, and including a first reference surface facing the cover, the first groove, and the second groove.

The first coupling part may include a plurality of first fastening parts to which fastening members are fastened and which are located along the edge of the case body and a first sealing part on which the sealing member is located and in which the first groove and the second groove are arranged to extend along the edge of the case body.

The first sealing part may include an extended sealing part extending between the first fastening parts along the edge of the case body and a curved sealing part which is located closer to an inside of the case body than each of the first fastening parts, extends along a circumference of the first fastening part, and is continuously connected to the extended sealing part.

The first coupling part may include a first thickness portion at a portion where the extended sealing part is located and having a thickness of the extended sealing part, and a second thickness portion at a portion where the curved sealing part is located and having a thickness which is a sum of a thickness of the first fastening part and a thickness of the curved sealing part.

The first groove may be recessed from the first reference surface and may include a first bottom surface, a first outer surface in contact with the first reference surface, and an open end facing the first outer surface with the first bottom surface therebetween and being open toward the inside of the case body.

The first sealing part may further include a partition wall which is between the inside of the case body and the first groove and restricts a flow of the sealing member. In other words, the partition wall may limit the spatial expansion of the sealing member.

The battery pack may further include a sealing gap between the case and the cover and in which another portion of the sealing member is located, wherein the sealing gap may include a first gap formed between the first reference surface and the cover and a second gap that is formed between the partition wall and the cover and open toward the inside of the case body.

The partition wall may be formed to have a height that is smaller than a depth of the first groove, and the second gap may be formed to have a width which is a sum of a width of the first gap and a width of a third gap corresponding to a height difference between the first groove and the partition wall.

The first groove may be recessed from the first reference surface and have a first bottom surface, and the second groove may have a smaller width than the first groove, may be formed to be further recessed from the first bottom surface, and may have a second bottom surface.

The second groove may include a second outer surface and a second inner surface facing the second outer surface with the second bottom surface therebetween.

At least one side of the second outer surface and the second inner surface may be stepped in a form of steps.

A recessed depth of the second groove may be greater than or equal to a width of the second bottom surface.

The first coupling part may further include a relief groove which is recessed from the first reference surface and spaced apart from the first groove and in which a portion of the sealing member located between the first reference surface and the cover is located.

The cover may include a cover body and a second coupling part which is on the cover body and includes a second reference surface at a location facing the first reference surface and a third groove at a location facing the first groove.

The second coupling part may include a plurality of second fastening parts to which fastening members are fastened and which are arranged along an edge of the cover body and a second sealing part on which the sealing member is arranged and in which the third groove is recessed in a direction opposite to a direction of the first groove and the second groove.

The third groove may be recessed from the second reference surface and may include a third bottom surface, a third outer surface, and a third inner surface facing the third outer surface with the third bottom surface therebetween.

At least one side of the third outer surface and the third inner surface may be stepped in a form of steps. In other words, the one side may have a shape of a staircase consisting of one or more, e.g. two, three or four, steps.

The second coupling part may further include a vent hole passing through the cover body and facing the first groove.

The sealing member may include a first portion located in the first groove, a second portion located in the second groove and connected to the first portion, a third portion located in the third groove and connected to the first portion, and a fourth portion located between the first reference surface and the second reference surface and connected to the first portion.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is an exploded schematic perspective view illustrating a main portion of a battery pack according to an embodiment of the present invention;
FIG. 2 is a schematic cross-sectional perspective view illustrating the battery pack of FIG. 1;
FIG. 3 is an exploded schematic perspective view illustrating main portions of a first coupling part of a case and a second coupling part of a cover according to an embodiment of the present invention;
FIG. 4 is an enlarged view illustrating a region "A" of FIG. 1;
FIG. 5 is an enlarged view illustrating a region "B" of FIG. 2;
FIG. 6 is a schematic cross-sectional view illustrating the main portions of the first coupling part of the case and the second coupling part of the cover according to an embodiment of the present invention;
FIG. 7 is a schematic cross-sectional perspective view illustrating the main portions of the first coupling part of the case and the second coupling part of the cover according to an embodiment of the present invention;
FIG. 8 is a schematic cross-sectional perspective view illustrating the first coupling part of the case according to an embodiment of the present invention;
FIG. 9 is a schematic cross-sectional perspective view illustrating the second coupling part of the cover according to an embodiment of the present invention;
FIG. 10 is a schematic cross-sectional perspective view illustrating a sealing member according to an embodiment of the present invention;
FIG. 11 is a schematic cross-sectional view illustrating main portions of a first coupling part of a case and a second coupling part of a cover according to another embodiment of the present invention;
FIG. 12 is a schematic cross-sectional perspective view illustrating the main portions of the first coupling part of the case and the second coupling part of the cover of FIG. 11;
FIG. 13 is a schematic cross-sectional view illustrating main portions of a first coupling part of a case and a second coupling part of a cover according to another embodiment of the present invention;
FIG. 14 is a schematic cross-sectional perspective view illustrating the main portions of the first coupling part of the case and the second coupling part of the cover of FIG. 13;
FIG. 15 is a schematic cross-sectional view illustrating main portions of a first coupling part of a case and a second coupling part of a cover according to another embodiment of the present invention; and
FIG. 16 is a schematic cross-sectional perspective view illustrating the main portions of the first coupling part of the case and the second coupling part of the cover of FIG. 15.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and should be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

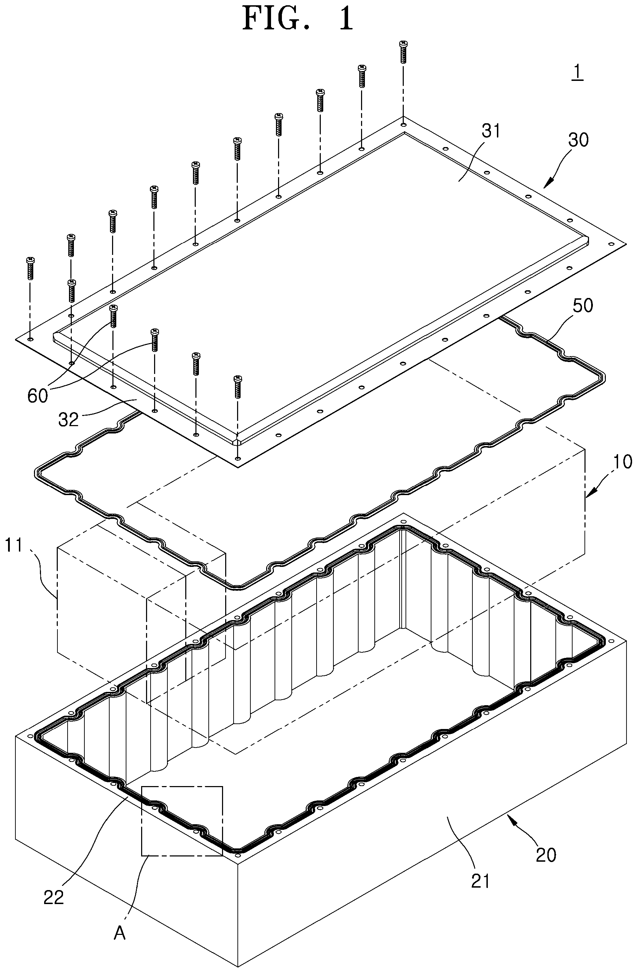

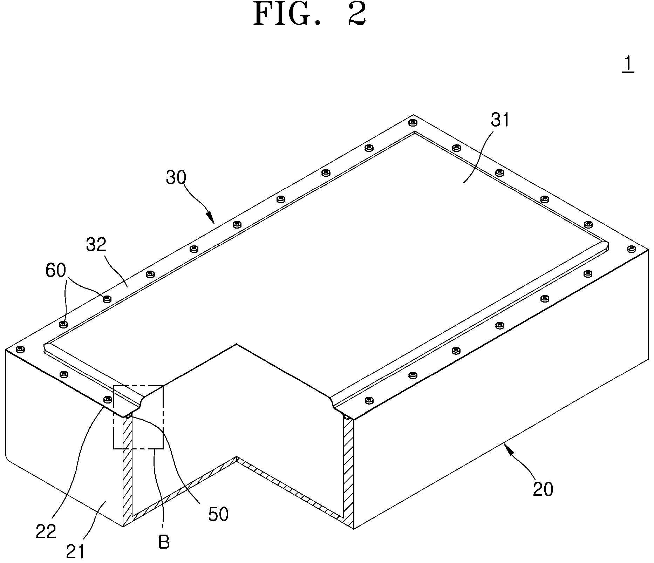

FIG. 1 is an exploded schematic perspective view illustrating a main portion of a battery pack according to an embodiment of the present invention; and FIG. 2 is a schematic cross-sectional perspective view illustrating the battery pack of FIG. 1.

Referring to FIGS. 1 and 2, a battery pack 1 according to an embodiment of the present invention includes a battery cell assembly 10, a case 20, a cover 30, and a sealing member 50.

The battery cell assembly 10 includes one or more battery cells 11. At least a portion of the battery cell assembly 10 is accommodated in the case 20. The cover 30 is coupled to the case 20. The sealing member 50 is disposed between the case 20 and the cover 30.

The battery cell 11 may function as a unit structure configured to store power and supply the power in the battery pack 1. In an embodiment, the battery cell 11 may be a lithium-ion secondary battery, and may be a cylindrical battery, lithium polymer battery, or prismatic battery. A battery case, or battery can, (a reference numeral is not shown) may be formed in any of various shapes, such as a circular shape, a prismatic shape, and a pouch shape. In addition, the battery case may be formed of a metal, such as aluminum, an aluminum alloy, or steel plated with nickel, or a laminated film or plastic constituting a pouch.

Herein, for the sake of convenience, directions and locations are set based on a state illustrated in FIG. 1, and the structures of and positional relationships between components or the like of the present invention will be described. In an embodiment, the case 20 may have a box shape with an open upper portion, and the cover 30 may have a cover shape in which a flange is formed, and may be coupled to the upper portion of the case 20.

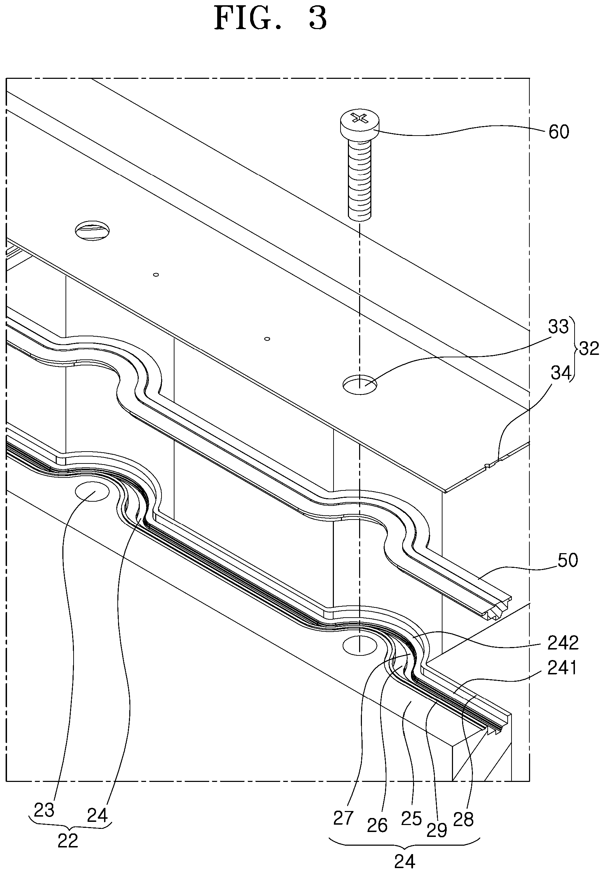

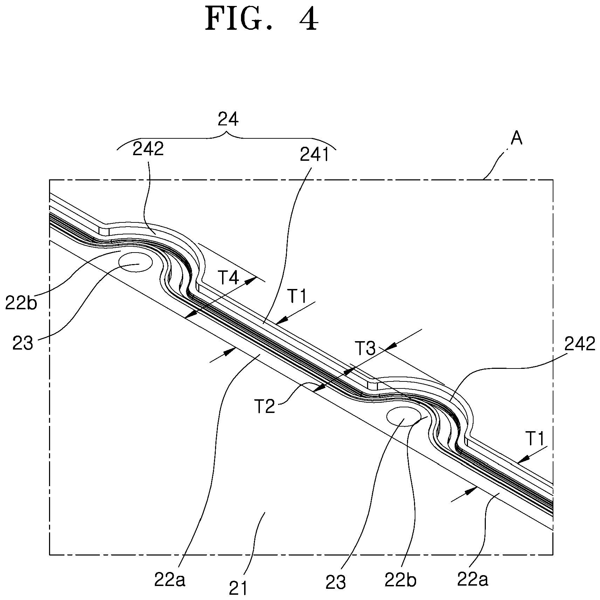

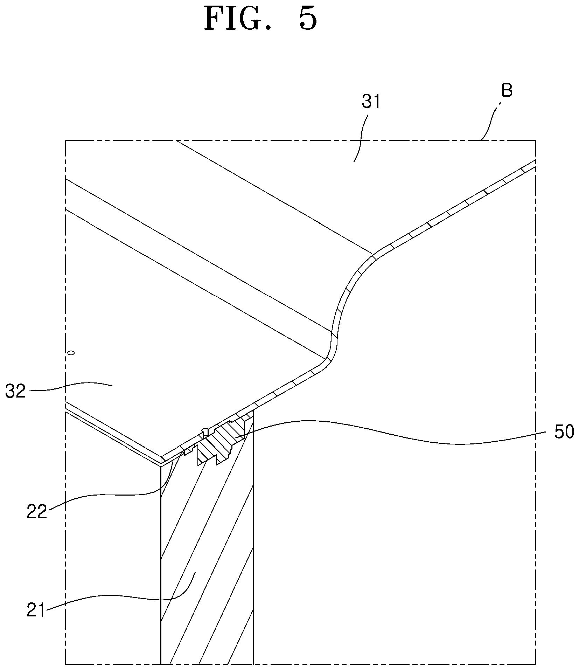

FIG. 3 is an exploded schematic perspective view illustrating main portions of a first coupling part of the case and a second coupling part of the cover according to an embodiment of the present invention; FIG. 4 is an enlarged view illustrating a region "A" of FIG. 1; and FIG. 5 is an enlarged view illustrating a region "B" of FIG. 2.

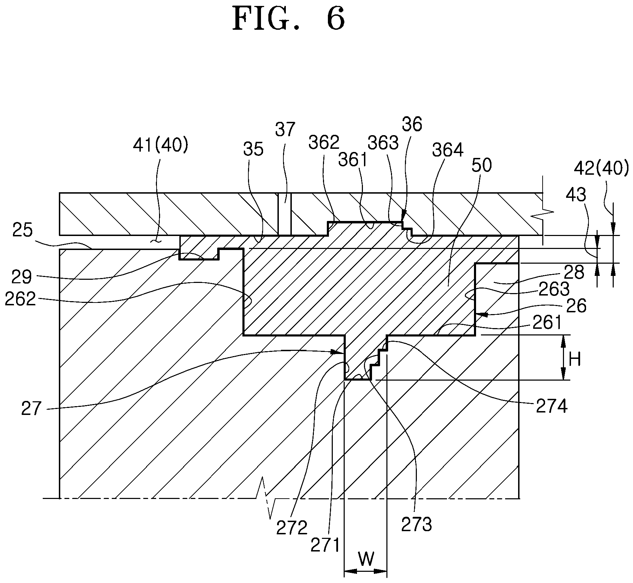

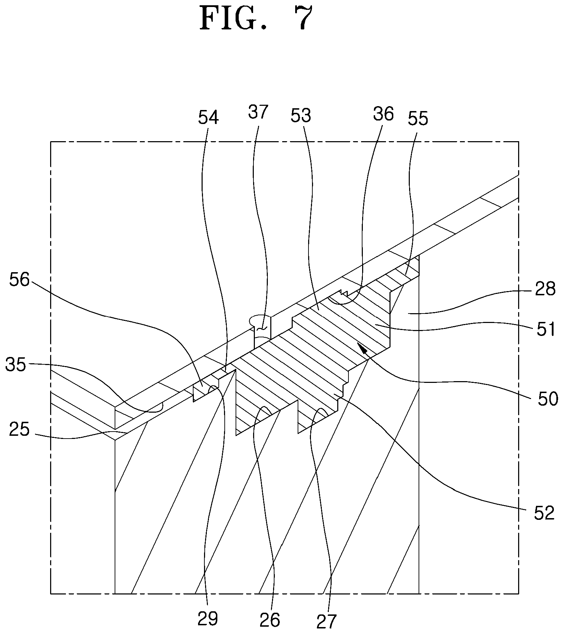

Referring to FIGS. 3 to 5, a first groove 26 and a second groove 27 are formed in the case 20. The second groove 27 may be formed at a bottom of the first groove 26. A portion of the sealing member 50 is disposed in the first groove 26 and the second groove 27. A sealing gap 40 may be formed between the case 20 and the cover 30, and another portion of the sealing member 50 may be located in the sealing gap 40 (see FIGS. 6 and 7).

Referring to FIGS. 1 and 2, the case 20 according to an embodiment of the present invention may include a case body 21 and a first coupling part 22. The first coupling part 22 may be arranged on an upper surface of the case body 21.

The case body 21 may have a box structure with an open upper portion. A space in which the battery cell assembly 10 may be seated and accommodated may be formed in the case body 21. The cover 30 may be seated on an edge of the case body 21.

The first coupling part 22 may be formed on the edge of the case body 21 on which the cover 30 is seated. The first coupling part 22 may be airtightly coupled to the cover 30 by the sealing member 50 and fastening members 60. The first coupling part 22 according to an embodiment of the present invention may include first fastening parts 23 and a first sealing part 24.

The first fastening parts 23 are installation parts coupled to the cover 30 by the fastening members 60. The first fastening parts 23 may be disposed to be spaced apart from each other along the edge of the case body 21. The fastening members 60 may be fastened to the plurality of first fastening parts 23.

In an embodiment, each of the fastening members 60 may be a bolt having a male thread structure, and each of the first fastening parts 23 may be concavely formed in a female thread groove structure. The first fastening part 23 may be formed in a female thread hole structure to pass through the case. The fastening member 60 may pass through the cover 30 and may be fastened to the first fastening part 23.

The first sealing part 24 is an installation part airtightly coupled to the cover 30 by the sealing member 50. The first sealing part 24 may be formed to continuously extend along the edge of the case body 21. The first sealing part 24 may be formed on an upper surface of the edge of the case body 21. In an embodiment, the first sealing part 24 may be coated with the sealing member 50 in a gel state, and the sealing member 50 may fill a gap between the first sealing part 24 and the cover 30 due to a compressive force of the cover 30.

Referring to FIGS. 1 to 4, the first sealing part 24 according to an embodiment of the present invention may include an extended sealing part 241, for example, a straight sealing part 241, and a curved sealing part 242.

The extended sealing part 241 may extend along the edge of the case body 21 between the first fastening parts 23. The curved sealing part 242 may be located closer to an inner portion of the case body 21 than the first fastening part 23 and may extend along a circumference of the first fastening part 23. The curved sealing part 242 may be continuously connected to the extended sealing part 241.

In an embodiment, the case body 21 may have a quadrangular box shape, and the edge of the case body 21 may have a straight elongated cross-sectional shape. In an embodiment, the first fastening part 23 may have a semicircular cross-sectional shape convex toward the inside of the case body 21, and the plurality of first fastening parts 23 may be disposed to be spaced apart from each other at intervals (e.g., set intervals). The extended sealing part 241 may be formed to linearly extend between the first fastening parts 23. In an embodiment, the curved sealing part 242 may be formed in a semicircular shape along the circumference of the first fastening part 23 inside the first fastening part 23 and integrally connected to the extended sealing part 241 to form a continuous linear shape with the extended sealing part 241.

In an embodiment, the first sealing part 24 may be continuously formed along the entire edge of the case body 21 by forming the curved sealing part 242, and airtightness performance due to the sealing member 50 can be stably secured. In addition, since the sealing member 50 may be disposed to avoid the first fastening part 23 by forming the curved sealing part 242, it is possible to prevent or substantially prevent fastening between the fastening member 60 and the first fastening part 23 from being hindered by the sealing member 50.

The first coupling part 22 according to an embodiment of the present invention may have different thicknesses (for example, extensions in a direction perpendicular to a circumferential edge of the case body 21 and/or the cover 30) according to locations by forming the curved sealing part 242 as described above. The first coupling part 22 may include a first thickness portion 22a and a second thickness portion 22b.

The first thickness portion 22a may be formed in a portion where the extended sealing part 241 is located and formed to have a first thickness T1 corresponding to a thickness of the extended sealing part 241. The second thickness portion 22b may be formed in a portion where the curved sealing part 242 is located and formed to have a fourth thickness T4 which is a sum of a second thickness T2 corresponding to a thickness of the first fastening part 23 and a third thickness T3 corresponding to a thickness of the curved sealing part 242. That is, the second thickness T2 plus the third thickness T3 may equal the fourth thickness T4.

When the extended sealing part 241 and the curved sealing part 242 are formed to have the same (or substantially the same) thickness, a same sealing performance can be realized along the entire edge of the case body 21. When the first thickness T1 and the third thickness T3 are the same, the fourth thickness T4 may be greater than the first thickness T1 by the second thickness T2.

In an embodiment, the first fastening part 23 has a semicircular cross-sectional shape, and a maximum thickness formed by both the first fastening part 23 and the curved sealing part 242 may be the fourth thickness T4. A thickness formed by both the first fastening part 23 and the curved sealing part 242 may decrease (e.g., gradually decrease) as the thickness approaches the extended sealing part 241 and becomes the first thickness T1 at the extended sealing part 241.

An edge portion of the case body 21 may have a default thickness corresponding to the first thickness T1 due to the extended sealing part 241. The edge portion of the case body 21 may have the fourth thickness T4 that is greater than the first thickness T1 due to the first fastening part 23 and the curved sealing part 242. Such reinforcing structures may be formed to be spaced apart from each other at intervals (e.g., set intervals) along the entire edge portion of the case body 21. In addition, since the thickness decreases (e.g., gradually decreases) from the fourth thickness T4 toward the first thickness T1, it is possible to prevent or substantially prevent stress from being concentrated at a boundary portion between the extended sealing part 241 and the curved sealing part 242.

Referring to FIGS. 1 to 5, the cover 30 according to an embodiment of the present invention may include a cover body 31 and a second coupling part 32.

The case body 21 may have the box structure with the open upper portion. The cover body 31 may have a cover structure capable of covering the open upper portion. The cover body 31 may be seated on the upper portion of the case body 21. A flange (a reference numeral is not shown) may be formed on an edge of the cover body 31, and the flange may be seated on the edge of the case body 21.

The second coupling part 32 may be formed on the edge of the cover body 31 seated on the case 20. The second coupling part 32 may be airtightly coupled to the case 20 by the sealing member 50 and the fastening member 60. The second coupling part 32 according to an embodiment of the present invention may include second fastening parts 33 and a second sealing part 34.

The second fastening parts 33 may be installation parts coupled to the case 20 by the fastening members 60, and a plurality of the second fastening parts 33 may be disposed along the edge of the cover body 31. In an embodiment, the fastening members 60 may be respectively fastened to each of the plurality of second fastening parts 33. Each of the second fastening parts 33 may be formed at a location corresponding to the first fastening part 23. The second fastening part 33 may be formed to pass through the cover body 31. The fastening member 60 may pass through the second fastening part 33 and may be fastened to the first fastening part 23.

The second sealing part 34 is an installation part airtightly coupled to the case 20 by the sealing member 50. In an embodiment, the second sealing part 34 may be formed to continuously extend along the edge of the cover body 31. The second sealing part 34 may be formed at a location corresponding to the first sealing part 24. The second sealing part 34 may be formed to extend in a shape corresponding to the first sealing part 24 including the extended sealing part 241 and the curved sealing part 242. In an embodiment, the first sealing part 24 may be coated with the sealing member 50 in the gel state, and the sealing member 50 may fill a gap between the first sealing part 24 and the second sealing part 34 due to the compressive force of the cover 30, and may be solidified.

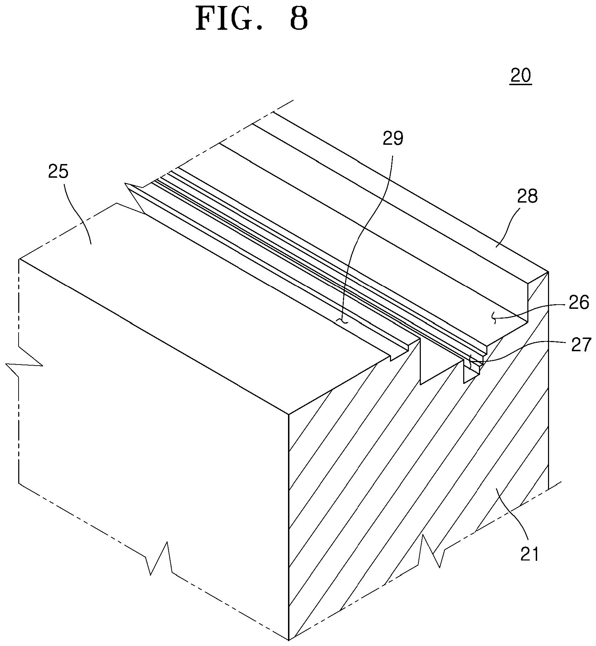

FIG. 6 is a schematic cross-sectional view illustrating the main portions of the first coupling part of the case and the second coupling part of the cover according to an embodiment of the present invention; FIG. 7 is a schematic cross-sectional perspective view illustrating the main portions of the first coupling part of the case and the second coupling part of the cover according to an embodiment of the present invention; and FIG. 8 is a schematic cross-sectional perspective view illustrating the first coupling part of the case according to an embodiment of the present invention.

Referring to FIGS. 3 and 6 to 8, the first sealing part 24 according to an embodiment of the present invention may include a first reference surface 25, a first groove 26, a second groove 27, a partition wall 28, and a relief groove 29.

The first reference surface 25 may be the upper surface of the edge of the case body 21. The first reference surface 25 may be an upper surface of the first coupling part 22. In the first sealing part 24 (or among elements of the first sealing part 24), the first reference surface 25 may be located closest to the cover 30. In an embodiment, the first reference surface 25 may have a width (e.g., a set width) in a thickness direction of the edge of the case body 21 and continuously extend along the edge of the case body 21.

The first groove 26 may be formed to be recessed downward from the first reference surface 25. The first groove 26 may be formed inside the first reference surface 25. Here, inside means "being close to the inside of the case body 21." The second groove 27 may be formed to be recessed from the first groove 26.

Referring to FIGS. 6 to 8, the first groove 26 according to an embodiment of the present invention may include a first bottom surface 261, a first outer surface 262, and a first inner surface 263.

The first bottom surface 261 may refer to a downwardly recessed bottom surface of the first groove 26. The first outer surface 262 and the first inner surface 263 may be located to face each other with the first bottom surface 261 interposed therebetween. In an embodiment, a cross-section of the first groove 26 may have a shape in which the recessed interior of the first groove 26 is surrounded by the first bottom surface 261, the first outer surface 262, and the first inner surface 263 and an upper portion is open.

The first outer surface 262 and the first inner surface 263 may refer to a pair of side surfaces facing each other, and the first bottom surface 261 may refer to a remaining surface located between the first outer surface 262 and the first inner surface 263. The first bottom surface 261 may refer to a bottom surface located relatively lower than the first outer surface 262 and the first inner surface 263. As long as the first groove 26 can be divided into the first bottom surface 261, the first outer surface 262, and the first inner surface 263 as described above, the first groove 26 may have any of various cross-sectional shapes.

In an embodiment, a longitudinal cross-section of the first groove 26 may have an overall quadrangular shape. The first bottom surface 261 may be the bottom surface of the first groove 26. In the pair of side surfaces, the first outer surface 262 may be a side surface in contact with the first reference surface 25. The first inner surface 263 may be located more inward than the first outer surface 262. The first inner surface 263 may be formed by the partition wall 28 (which will be described below).

The second groove 27 may be formed to be recessed downward from the first bottom surface 261. The second groove 27 may be formed to have a width W that is smaller than a width of the first bottom surface 261. The second groove 27 may be formed to have the width W that is smaller than that of the first groove 26. The second groove 27 may be formed in an intermediate portion of the first groove 26 in a width direction and may have a multi-stepped shape along with the first groove 26. E.g., the second groove 27 may have a sidewall having a staircase shape. The staircase shape may consist of, for example, two, three or four steps. Accordingly, the sealing member 50 introduced into the first groove 26 may be naturally introduced downward into the second groove 27. In this case, the width direction refers to a same direction as a thickness direction of the edge of the case body 21.

The second groove 27 according to an embodiment of the present invention may include a second bottom surface 271, a second outer surface 272, and a second inner surface 273.

The second bottom surface 271 may refer to a downwardly recessed bottom surface of the second groove 27. The second bottom surface 271 may have a smaller width than the first bottom surface 261. The second outer surface 272 and the second inner surface 273 may be located to face each other with the second bottom surface 271 interposed therebetween. In an embodiment, a cross-section of the second groove 27 may have a shape in which a recessed interior is surrounded by the second bottom surface 271, the second outer surface 272, and the second inner surface 273 and an upper portion is open.

The second outer surface 272 and the second inner surface 273 may refer to a pair of side surfaces facing each other, and the second bottom surface 271 may refer to a remaining surface located between the second outer surface 272 and the second inner surface 273. The second bottom surface 271 may refer to a bottom surface located relatively lower than the second outer surface 272 and the second inner surface 273. As long as the second groove 27 can be divided into the second bottom surface 271, the second outer surface 272, and the second inner surface 273 as described above, the second groove 27 may have any of various cross-sectional shapes.

In an embodiment, a longitudinal cross-section of the second groove 27 may have an overall quadrangular shape. The second bottom surface 271 may be the bottom surface of the second groove 27. In the pair of side surfaces, the second outer surface 272 may be a side surface closer to the first outer surface 262. The second inner surface 273 may be located inside the second outer surface 272. In the pair of side surfaces, the second inner surface 273 may be a side surface closer to the first inner surface 263.

In an embodiment, at least one side of the second outer surface 272 and the second inner surface 273 may be formed to be stepped in the form of stairs. In an embodiment, the second outer surface 272 may be formed to be stepped in the form of stairs. In an embodiment, the second inner surface 273 may be formed to be stepped in the form of stairs. In an embodiment, both the second outer surface 272 and the second inner surface 273 may be stepped in the form of stairs. Here, being "formed to be stepped in the form of stairs" means that one or more protruding steps are formed between the first bottom surface 261 and the second bottom surface 271.

When at least one side of the second outer surface 272 and the second inner surface 273 is formed to be stepped in the form of stairs, the second groove 27 may have a width which increases from the second bottom surface 271 toward the first bottom surface 261. Accordingly, a contact area of the sealing member 50 introduced into the first groove 26 may increase without hindering the sealing member 50 from reaching the second bottom surface 271 along the second outer surface 272 and the second inner surface 273.

For example, when the second inner surface 273 has a stepped structure, the second inner surface 273 may have an increased surface area when compared to an embodiment in which a second inner surface 273 has a simple vertical surface. The second inner surface 273 may be in contact with the sealing member 50 over a further increased area. In addition, since the sealing member 50 may be in contact with the first sealing part 24 over a further increased area, more superior sealing performance can be achieved.

For example, when the second inner surface 273 is formed to have a stepped structure, a creepage distance from the second bottom surface 271 to the first bottom surface 261 may increase. The creepage distance may refer to a minimum distance between two conductive materials along a surface of an insulating material located between the conductive materials.

According to an embodiment of the present invention, the creepage distance can be increased by additionally forming the second groove 27 in addition to the first groove 26 and unevenly forming the side surfaces of the second groove 27 in a stepped structure as described above, thereby improving insulation performance.

In addition, when the second inner surface 273 has a stepped structure, a first horizontal surface 274 may be further formed between the second bottom surface 271 and the first bottom surface 261. The first sealing part 24 and the sealing member 50 may be in more uniform contact with each other at various heights in a vertical direction due to the first horizontal surface 274. Since the sealing member 50 introduced into the second groove 27 may easily flow in an extending direction of the first sealing part 24 along the second bottom surface 271 and the first horizontal surface 274, the sealing member 50 may be more quickly and uniformly distributed throughout the first sealing part 24.

When the second outer surface 272 is formed to be stepped, an effect the same as or corresponding to an effect of the second inner surface 273 may be achieved. In an embodiment, both the second outer surface 272 and the second inner surface 273 are formed to be stepped, and both an effect due to the second inner surface 273 and an effect due to the second outer surface 272 may be achieved.

In an embodiment, a recessed depth H of the second groove 27 may be greater than or equal to the width W of the second groove 27. In an embodiment, each of the second outer surface 272 and the second inner surface 273 of the second groove 27 may have a vertical length that is greater than or equal to the width W of the second groove 27.

In an embodiment, the width W of the second groove 27 may be preset in a transversal direction, and an electrical conduction path extending between the case 20 and the cover 30 in an overall transversal direction may be more stably blocked using the sealing member 50 filling the interior of the second groove 27 by forming the second groove 27 deeper than the width W in the transversal direction.

The partition wall 28 may be disposed between the interior of the case body 21 and the first groove 26. The partition wall 28 may be formed to protrude upward from the first bottom surface 261 of the first groove 26. Among the side surfaces of the partition wall 28, a side surface of the partition wall 28 in contact with the first groove 26 may form the first inner surface 263. The first inner surface 263 may be disposed to face the first outer surface 262 with the first bottom surface 261 interposed therebetween.

The partition wall 28 may prevent or substantially prevent the sealing member 50 in the first groove 26 from flowing into (or entering) the case body 21. The partition wall 28 may maintain the state of the interior of the first groove 26 and the second groove 27 being filled with the sealing member 50. In an embodiment, the hot melt type sealing member 50 may be prevented or substantially prevented from being introduced into the case 20 and lost by forming the partition wall 28. The sealing member 50 may more stably flow along the edge of the case body 21 and the partition wall 28, and the entirety of the edge of the case body 21 may be stably coated with the sealing member 50.

When compared to an embodiment in which a partition wall 28 is not formed, a creepage distance from the first bottom surface 261 to the interior of the case body 21 may be increased by a vertical length of the first inner surface 263 by forming the partition wall 28, thereby further improving insulation performance.

The sealing gap 40 may be formed between the case 20 and the cover 30. The sealing gap 40 may be formed between an upper surface of the case body 21 and a lower surface of the cover body 31. The sealing gap 40 may be formed between the first sealing part 24 and the second sealing part 34. The sealing gap 40 may be formed between the first reference surface 25 and a second reference surface 35 (which will be described below). When the cover 30 is seated on and pressed toward the case 20 while the first sealing part 24 is coated with the sealing member 50, a portion of the sealing member 50 which overflows to the outside of the first sealing part 24 may be located in the sealing gap 40.

The sealing gap 40 according to an embodiment of the present invention may include a first gap 41 and a second gap 42.

The first gap 41 may be formed between the first reference surface 25 and the second reference surface 35. The first gap 41 may be formed outside the first groove 26. In this case, outside may mean "being located further apart from the inside of the case body 21 than the first groove 26." The sealing member 50 located in the first gap 41 may airtightly seal the gap between the first reference surface 25 and the second reference surface 35 at an outer side of the first groove 26.

The first gap 41 may be formed between the first reference surface 25 and the second reference surface 35 and also formed between the first fastening part 23 and the second fastening part 33. The sealing member 50 in the first gap 41 may be located between the first reference surface 25 and the second reference surface 35 and also located between the first fastening part 23 and the second fastening part 33. When the fastening member 60 is fastened to the first fastening part 23 and the second fastening part 33, a fastening force of the fastening member 60 may be directly transmitted to the sealing member 50 in the first gap 41. The sealing member 50 may be in firm close contact with the first reference surface 25 and the second reference surface 35 by the fastening force of the fastening member 60.

The second gap 42 may be formed between the partition wall 28 and the bottom of the cover 30. The second gap 42 may be formed between the partition wall 28 and the second sealing part 34. The second gap 42 may be formed inside the first groove 26. Here, inside may mean "being located closer to the inside of the case body 21 than the first groove 26." In an embodiment, the second gap 42 may be formed to be open toward the inside of the case body 21. The sealing member 50 located in the second gap 42 may airtightly seal the gap between the partition wall 28 and the second sealing part 34 at an inner side of the first groove 26.

The partition wall 28 may be formed to have a height that is smaller than a depth of the first groove 26. The partition wall 28 may be formed to have a height that is greater than a depth of the second groove 27. The partition wall 28 may be formed to have a smaller height than the first outer surface 262. The first inner surface 263 may be formed to have a smaller height than the first outer surface 262. The partition wall 28 may have a height which is smaller than a height of the first groove 26 by a height of a third gap 43. A height difference between the first groove 26 and the partition wall 28 may correspond to the third gap 43. In an embodiment, the second gap 42 may be formed to have a width which is a sum of a width of the first gap 41 and a width of the third gap 43. In this case, the width of the first gap 41 and the width of the second gap 42 mean vertical widths.

The second gap 42 may have a greater width than the first gap 41 by the width of the third gap 43. The sealing member 50 filling the second gap 42 may be formed to have a greater thickness than the sealing member 50 filling the first gap 41 by a thickness of the third gap 43. The sealing member 50 in the first groove 26 may definitely reach an inner end of the first sealing part 24 in contact with the inside of the case body 21 through the second gap 42. The sealing member 50 located in the second gap 42 may firmly airtightly seal the gap between the partition wall 28 and the second sealing part 34.

A gap between the case 20 and the cover 30 may be primarily airtightly sealed and insulated by the sealing member 50 located in the first gap 41. The gap between the case 20 and the cover 30 may be secondarily airtightly sealed and insulated by the sealing member 50 filling the first groove 26, the second groove 27, and a third groove 36 (which will be described below). The gap between the case 20 and the cover 30 may be thirdly airtightly sealed and insulated by the sealing member 50 located in the second gap 42.

The relief groove 29 may be formed to be recessed from the first reference surface 25 at a location spaced apart from the first groove 26. The relief groove 29 may be disposed outside the first groove 26, e.g., opposite the partition wall 28. In an embodiment, a portion of the sealing member 50 overflowing from the first groove 26 toward the first reference surface 25 may be located between the first reference surface 25 and the cover 30 and introduced into the relief groove 29 and solidified in a stagnant state.

The sealing member 50 located between the first reference surface 25 and the second reference surface 35 may flow outward and may be introduced into the relief groove 29 by pressure applied when the case 20 and the cover 30 are coupled. Due to the above action, the thickness of the sealing member 50 in the first gap 41 formed between the first reference surface 25 and the second reference surface 35 may be decreased. An outermost end portion of the sealing member 50 may be located in the relief groove 29. Due to the above action, the sealing member 50 may be prevented or substantially prevented from leaking to the outside of the case 20 and the cover 30.

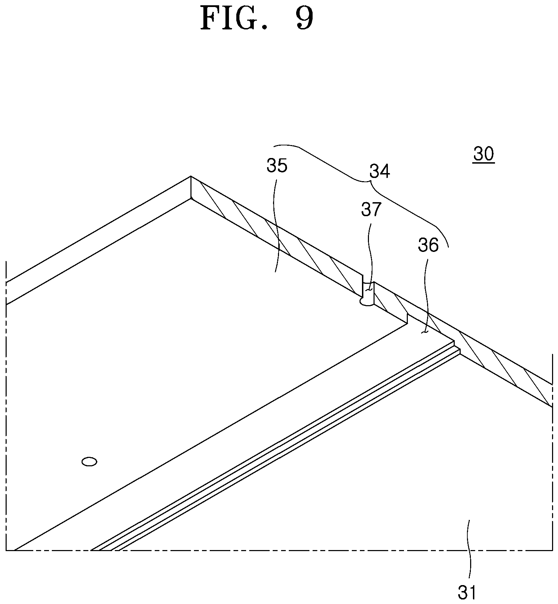

FIG. 9 is a schematic cross-sectional perspective view illustrating the second coupling part of the cover according to an embodiment of the present invention.

Referring to FIGS. 6, 7, and 9, the second sealing part 34 according to an embodiment of the present invention may include the second reference surface 35, the third groove 36, and a vent hole 37.

The second reference surface 35 may be a lower surface of the edge of the cover body 31. In the second sealing part 34 (or among elements of the second sealing part 34), the second reference surface 35 may be located closest to the case 20. The second reference surface 35 may have a width (e.g., a set width) in the thickness direction of the edge of the case body 21 and may continuously extend along the edge of the cover body 31.

The second reference surface 35 may be formed at a location corresponding to the first reference surface 25 and the partition wall 28. The second reference surface 35 may be disposed to face the first reference surface 25 and the partition wall 28. The second reference surface 35 may be formed inside and outside the third groove 36. The first gap 41 may be formed between the second reference surface 35 and the first reference surface 25, and the second gap 42 may be formed between the second reference surface 35 and the partition wall 28. Here, outside may mean "being disposed further apart from the inside of the case body 21 than the third groove 36." Here, inside may mean "being located closer to the inside of the case body 21 than the third groove 36."

The third groove 36 may be formed to be recessed from the second reference surface 35 in a direction opposite to a direction of the first groove 26 and the second groove 27. The third groove 36 may be formed to be recessed upward from the second reference surface 35. The third groove 36 may be formed at a location corresponding to the first groove 26. The third groove 36 may be disposed to face the first groove 26.

The third groove 36 may be formed at a location corresponding to the second groove 27. The third groove 36 may have a smaller width than the first groove 26 and may be disposed to face the second groove 27. The third groove 36 may have a width greater than or equal to the width of the second groove 27. The third groove 36 may be disposed to face the second groove 27 with the first groove 26 interposed therebetween.

The third groove 36 according to an embodiment of the present invention may include a third bottom surface 361, a third outer surface 362, and a third inner surface 363.

The third bottom surface 361 may be an upper surface of the upwardly recessed third groove 36. The third outer surface 362 and the third inner surface 363 may be located to face each other with the third bottom surface 361 interposed therebetween. The third groove 36 may have a cross-sectional shape in which a recessed interior is surrounded by the third bottom surface 361, the third outer surface 362, and the third inner surface 363, and a lower portion is open.

The third outer surface 362 and the third inner surface 363 may refer to a pair of side surfaces facing each other, and the third bottom surface 361 may refer to a remaining surface located between the third outer surface 362 and the third inner surface 363. The third bottom surface 361 may refer to an upper surface located relatively higher than the third outer surface 362 and the third inner surface 363. As long as the third groove 36 can be divided into the third bottom surface 361, the third outer surface 362, and the third inner surface 363 as described above, the third groove 36 may have any of various cross-sectional shapes.

In an embodiment, a longitudinal cross-section of the third groove 36 may have an overall quadrangular shape. The third bottom surface 361 may be the upper surface of the third groove 36. In the pair of side surfaces, the third outer surface 362 may be a side surface in contact with the second reference surface 35. The third inner surface 363 may be located inside the third outer surface 362.

In an embodiment, at least one side of the third outer surface 362 and the third inner surface 363 may be formed to be stepped in the form of stairs. In an embodiment, the third outer surface 362 may be formed to be stepped in the form of stairs. In an embodiment, the third inner surface 363 may be formed to be stepped in the form of stairs. In an embodiment, both the third outer surface 362 and the third inner surface 363 may be formed to be stepped in the form of stairs. Here, being "formed to be stepped in the form of stairs" means that one or more protruding steps are formed between the second reference surface 35 and the third bottom surface 361.

In an embodiment, at least one side of the third outer surface 362 and the third inner surface 363 are formed to be stepped in the form of stairs, and the third groove 36 may have a width which increases from the third bottom surface 361 toward the second reference surface 35.

For example, when the third inner surface 363 has a stepped structure, the third inner surface 363 may have an increased surface area when compared to an embodiment in which a third inner surface 363 has a simple vertical surface. The third inner surface 363 may be in contact with the sealing member 50 over a further increased area. In addition, since the sealing member 50 may be in contact with the second sealing part 34 over an increased area, better sealing performance can be achieved.

When the third inner surface 363 is formed as a stepped structure, a creepage distance from the third bottom surface 361 to the second reference surface 35 may be increased, and insulation performance can be improved.

In addition, when the third inner surface 363 has a stepped structure, the third inner surface 363 may additionally have a second horizontal surface 364 between the second reference surface 35 and the third bottom surface 361. Vertical contact between the second sealing part 34 and the sealing member 50 may be made more uniformly at various heights due to the second horizontal surface 364. In an embodiment, the sealing member 50 introduced into the third groove 36 may easily flow in an extending direction of the second sealing part 34 along the third bottom surface 361 and the second horizontal surface 364, and the sealing member 50 may be more quickly and uniformly distributed throughout the second sealing part 34.

In an embodiment, the third outer surface 362 is formed to be stepped, and an effect the same as or corresponding to an effect of the third inner surface 363 may be achieved. In addition, if both the third outer surface 362 and the third inner surface 363 are formed to be stepped, both the effect due to the third inner surface 363 and the effect due to the third outer surface 362 may be concurrently, or simultaneously, achieved.

The vent hole 37 may be formed to vertically pass through the cover body 31. The vent hole 37 may be disposed to face the first groove 26. The vent hole 37 may be disposed to be spaced apart from the third groove 36. Bubbles generated in a material of the sealing member 50 and bubbles mixed with the sealing member 50 between the first sealing part 24 and the second sealing part 34 may be discharged to the outside through the vent hole 37. Accordingly, it is possible to prevent or substantially prevent the sealing member 50 and a surface of the case 20 and the sealing member 50 and a surface of the cover 30 from not being in close contact with each other due to the bubbles.

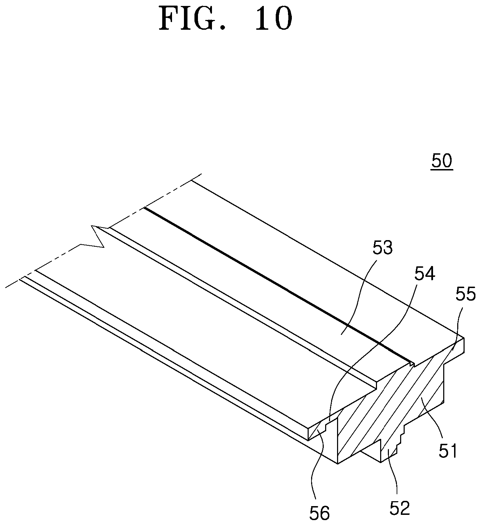

FIG. 10 is a schematic cross-sectional perspective view illustrating the sealing member according to an embodiment of the present invention.

Referring to FIGS. 6, 7, and 10, in an embodiment, the first sealing part 24 may be coated with the sealing member 50 in a gel or liquid state, and the sealing member 50 may fill the gap between the case 20 and the cover 30 and come into close contact with the case 20 and the cover 30 due to a pressing force generated when the cover 30 is seated on and coupled to the case 20. A lower portion of the sealing member 50 may be in contact with the first sealing part 24, and an upper portion of the sealing member 50 may be in contact with the second sealing part 34. The bubbles mixed with the sealing member 50 may be discharged upward to the outside of the cover 30 through the vent hole 37.

The sealing member 50 is a member that seals the gap between the case 20 and the cover 30. The gap between the case 20 and the cover 30 may be sealed by the sealing member 50 without pores. In an embodiment, the sealing member 50 may include a butyl material, a rubber material, etc. In an embodiment, the sealing member 50 may include a hot melt having an adhesive component.

The sealing member 50 according to an embodiment of the present invention may be divided into a first portion 51, a second portion 52, a third portion 53, a fourth portion 54, a fifth portion 55, and a sixth portion 56. In an embodiment, the sealing member 50 may have a form in which the first portion 51, the second portion 52, the third portion 53, the fourth portion 54, the fifth portion 55, and the sixth portion 56 are integrally connected.

In the sealing member 50, the first portion 51 may be a portion located in the first groove 26. The second portion 52 may be located in the second groove 27 and connected to a lower portion of the first portion 51. The third portion 53 may be located in the third groove 36 and connected to an upper portion of the first portion 51.

The fourth portion 54 may be located between the first reference surface 25 and the second reference surface 35 and connected to an outer portion of the first portion 51. The fifth portion 55 may be located between the partition wall 28 and the second reference surface 35 and connected to an inner portion of the first portion 51. The sixth portion 56 may be located in the relief groove 29 and connected to an outer portion of the fourth portion 54.

In an embodiment, the third portion 53, the first portion 51, and the second portion 52 of the sealing member 50 may be formed in an "I" shape continuously extending in the vertical direction. In an embodiment, the sixth portion 56, the fourth portion 54, the first portion 51, and the fifth portion 55 of the sealing member 50 may be formed in a "-" shape continuously extending in a transversal direction. In an embodiment, the sealing member 50 may have an overall "+" shape (cross shape) based on the first portion 51.

An embodiment of the present invention may have a structure in which the second groove 27 is additionally formed in the first groove 26 formed in the case 20 and the third groove 36 is additionally formed in the cover 30. Accordingly, the sealing member 50 may fill a further expanded space when compared to an embodiment in which only a first groove 26 is formed in a case 20. Accordingly, a surface coated with the sealing member 50 and an amount of the sealing member 50 for coating can be increased, and an improvement in airtightness corresponding to an increase in amount of the filled sealing member 50 can be achieved.

As the second groove 27 is formed to be stepped downward in the first groove 26 of the case 20, and the third groove 36 is formed to be stepped upward in the cover 30, the second groove 27 and the third groove 36 may function as a stopper which restricts the inner and outer flow of the sealing member 50. The terms "stepped upward" and "stepped downward" may in this case be understood to mean "having a shape of a staircase leading downward (to the bottom of the second groove 27)" or "having a shape of a staircase leading upward (to the top of the third groove 36)". The sealing member 50 may be solidified while filling the first groove 26, the second groove 27, and the third groove 36. The first groove 26, the second groove 27, and the third groove 36 may prevent or substantially prevent the sealing member 50 from being pushed outward and inward by pressure or an external force generated when the case 20 and the cover 30 are assembled.

As the first groove 26 and the second groove 27 are formed in the case 20 to be stepped downward multiple stages, and the third groove 36 is formed in the cover 30 to be stepped upward, the sealing member 50 may be in more definite close contact with the case 20 and the cover 30 when compared to an embodiment in which only the first groove 26 is formed in the case 20. Accordingly, air can be prevented or substantially prevented from being introduced through the gap between the case 20 and the cover 30.

However, the battery pack 1 according to the present invention is not limited to the structure of the battery pack 1 according to the above-described embodiment of the present invention. For example, some of the components of the battery pack 1 according to the above-described embodiment of the present invention may be omitted or changed and applied by comprehensively considering the specifications of the battery cell assembly 10, the case 20, the cover 30, the sealing member 50, a use environment and a usage of the battery pack 1, and the like. For example, various embodiments, such as those which will be described below, may be applied.

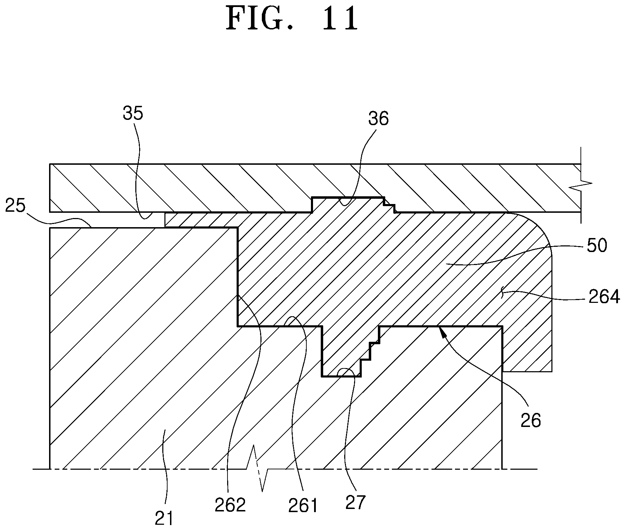

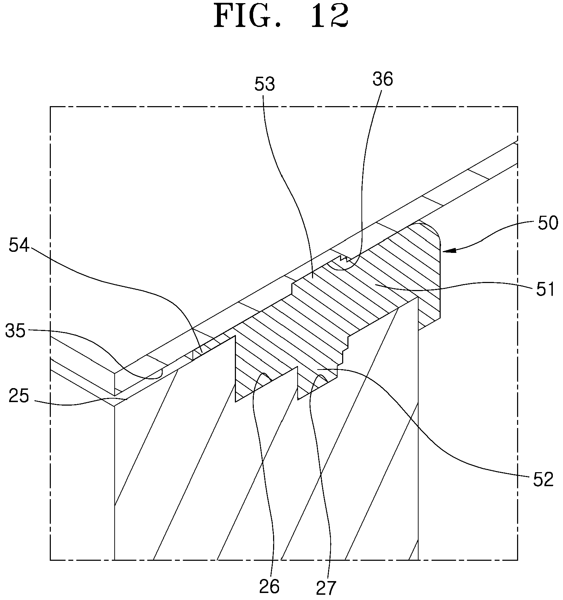

FIG. 11 is a schematic cross-sectional view illustrating main portions of a first coupling part of a case and a second coupling part of a cover according to another embodiment of the present invention; and FIG. 12 is a schematic cross-sectional perspective view illustrating the main portions of the first coupling part of the case and the second coupling part of the cover of FIG. 11.

Referring to FIGS. 11 and 12, a battery pack 1 according to the present embodiment of the present invention may have a structure in which a partition wall 28, a relief groove 29, and a vent hole 37 are omitted when compared to the embodiment of FIG. 6. A first groove 26 of the battery pack 1 according to the present embodiment of the present invention may include an open end 264 instead of the first inner surface 263 disclosed in the embodiment of FIG. 6.

A first bottom surface 261 may be formed on the bottom surface of the first groove 26. An upper end of a first outer surface 262 may be in contact with a first reference surface 25. The open end 264 may be disposed to face the first outer surface 262 with the first bottom surface 261 interposed therebetween and may be formed to be laterally open toward the inside of a case body 21. The open end 264 may have the same (or substantially the same) vertical height as the first outer surface 262.

The first groove 26 may communicate with the inside of the case body 21 through the open end 264. A sealing member 50 may be formed to have a thickness corresponding to a depth of the first groove 26 from the first outer surface 262 to the inside of the case body 21 by forming the open end 264. According to the present embodiment of the present invention, the first groove 26 may have an increased width when compared to the embodiment of FIG. 6. Due to the above action, an inner portion of the sealing member 50 located closer to the inside of the case body 21 than the second groove 27 may have a thickness and a transversal extending length which are greater than those of the first embodiment of the present invention. Accordingly, according to the present embodiment of the present invention, an improvement in airtightness corresponding to increases in the thickness, length, and amount of the filled sealing member 50 can be achieved when compared to the embodiment of FIG. 6.

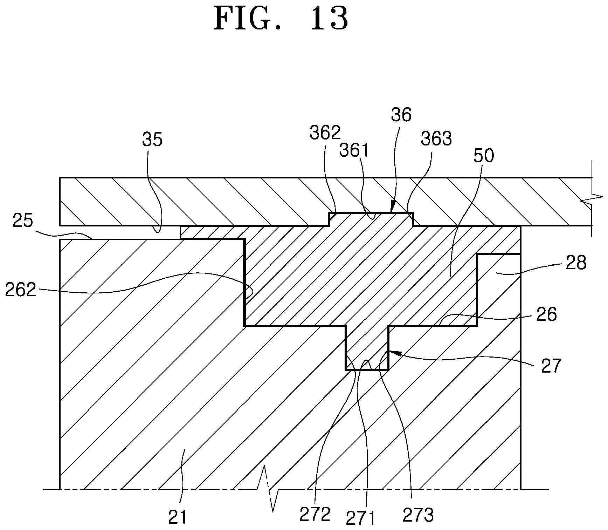

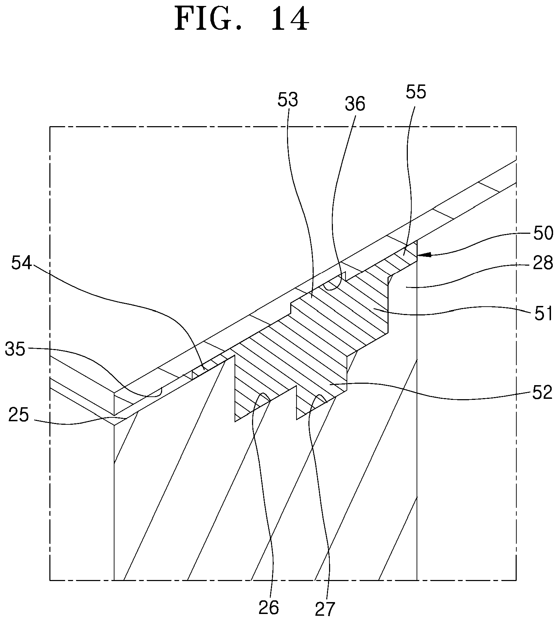

FIG. 13 is a schematic cross-sectional view illustrating main portions of a first coupling part of a case and a second coupling part of a cover according to another embodiment of the present invention; and FIG. 14 is a schematic cross-sectional perspective view illustrating the main portions of the first coupling part of the case and the second coupling part of the cover of FIG. 13.

Referring to FIGS. 13 and 14, in a battery pack 1 according to the present embodiment of the present invention, a side surface of a second groove 27 and a side surface of a third groove 36 may have simple vertical surface shapes without being formed to be stepped in the form of steps when compared to the embodiment of FIG. 6.

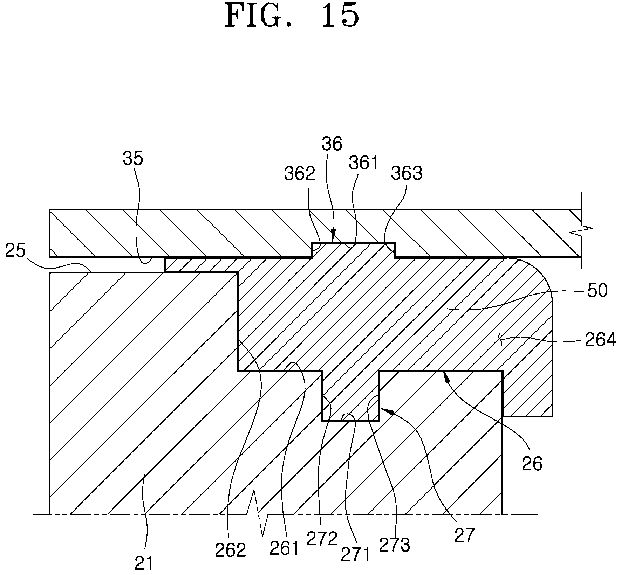

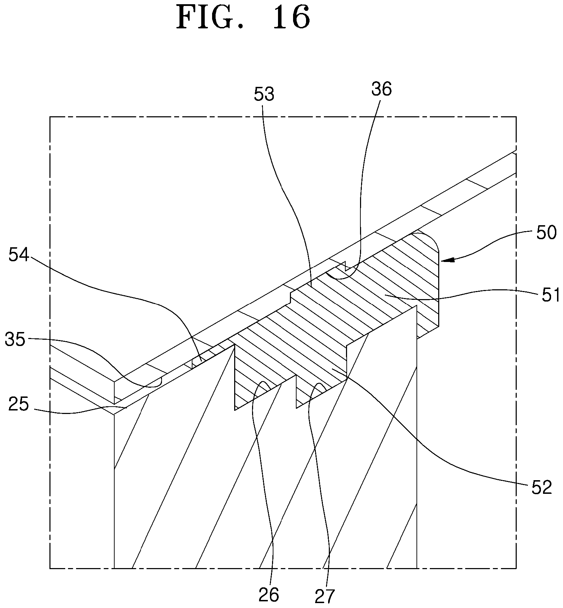

FIG. 15 is a schematic cross-sectional view illustrating main portions of a first coupling part of a case and a second coupling part of a cover according to another embodiment of the present invention; and FIG. 16 is a schematic cross-sectional perspective view illustrating the main portions of the first coupling part of the case and the second coupling part of the cover of FIG. 15.

Referring to FIGS. 15 and 16, a battery pack 1 according to the present embodiment of the present invention may have a structure in which a partition wall 28, a relief groove 29, and a vent hole 37 are omitted, and a side surface of a second groove 27 and a side surface of a third groove 36 have simple vertical surface shapes without being formed to be stepped in the form of steps when compared to the embodiment of FIG. 6.

Each of the embodiments of FIG. 11, FIG. 13, and FIG. 15 of the present invention may have a structure in which some components of the embodiment of FIG. 6 are omitted or changed. Accordingly, when describing these embodiments of the present invention, components different from those of the embodiment of FIG. 6 may be mainly described. When the embodiments of FIG. 11, FIG. 13, and FIG. 15 are described, redundant descriptions of components which are the same as or corresponding to those of the embodiment of FIG. 6 may be omitted and replaced by those of the embodiment of FIG. 6.

According to one or more embodiments of the present invention, as a second groove is additionally formed in a case in addition to a first groove, a sealing member can fill a further expanded space when compared to an embodiment in which only a first groove is formed. Accordingly, a surface coated with the sealing member and an amount of the sealing member for coating can be increased, and an improvement in airtightness corresponding to an increase in the amount of the filled sealing member can be achieved.

In addition, according to one or more embodiments of the present invention, as the second groove is further formed in the case in addition to the first groove, a creepage distance from the outside to the inside of the case can increase when compared to an embodiment in which only the first groove is formed in the case, and an improvement in insulation performance corresponding thereto can be achieved.

In addition, according to one or more embodiments of the present invention, when the second groove is formed in the first groove of the case to be stepped downward, and a third groove is formed in a cover to be stepped upward, the second groove and the third groove may function as a stopper which restricts the inner and outer flow of the sealing member. Accordingly, the sealing member can be prevented or substantially prevented from being pushed by a pressure or external force generated when the case and the cover are assembled.

In addition, according to one or more embodiments of the present invention, when the second groove is formed to be stepped downward in the first groove of the case, and the third groove is formed to be stepped upward in the cover, the sealing member can be in more definite close contact with the case and the cover when compared to an embodiment in which only the first groove is formed in the case. Accordingly, air can be prevented or substantially prevented from being introduced through a gap between the case and the cover.

However, aspects and effects obtainable through the present disclosure are not limited to the above aspects and effects, and other technical aspects and effects that are not mentioned will be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. A battery pack (1) comprising:
a battery cell assembly (10) comprising one or more battery cells (11);
a case (20) in which at least a portion of the battery cell assembly (10) is accommodated, the case (20) comprising a first groove (26) and a second groove (27);
a cover (30) coupled to the case (20); and
a sealing member (50) between the case (20) and the cover (30), a portion of the sealing member (50) being located in the first groove (26) and the second groove (27).

2. The battery pack (1) as claimed in claim 1, wherein the case (20) comprises:
a case body (21); and
a first coupling part (22) at an edge of the case body (21) and coupled to the cover (30) and comprising a first reference surface (25) facing the cover (30), the first groove (26), and the second groove (27).

3. The battery pack (1) as claimed in claim 2, wherein the first coupling part (22) comprises:
a plurality of first fastening parts (23) to which fastening members (60) are fastened and which are arranged along the edge of the case body (21); and
a first sealing part (24) on which the sealing member (50) is located and in which the first groove (26) and the second groove (27) are located to extend along the edge of the case body (21).

4. The battery pack (1) as claimed in claim 3, wherein the first sealing part (24) comprises:
an extended sealing part (241) extending between the first fastening parts (23) along the edge of the case body (21); and
a curved sealing part (242) which is located closer to an inside of the case body (21) than each of the first fastening parts (23), extends along a circumference of the first fastening part (23), and is continuously connected to the extended sealing part (241),
wherein the first coupling part (22) comprises:
a first thickness portion (22a) which is formed in a portion where the extended sealing part (241) is located and formed to have a thickness of the extended sealing part (241); and
a second thickness portion (22b) which is formed in a portion where the curved sealing part (242) is located and formed to have a thickness which is a sum of a thickness of the first fastening part (23) and a thickness of the curved sealing part (242).

5. The battery pack (1) as claimed in one of claims 2 to 4, wherein the first groove (26) is recessed from the first reference surface (25) and comprises:
a first bottom surface (261);
a first outer surface (262) in contact with the first reference surface (25); and
an open end (264) facing the first outer surface (262) with the first bottom surface (261) therebetween and being open toward an inside of the case body (21).

6. The battery pack (1) as claimed in claim 3 or claim 4, wherein the first sealing part (24) further comprises a partition wall (28) which is between an inside of the case body (21) and the first groove (26) and restricts a flow of the sealing member (50).

7. The battery pack (1) as claimed in claim 6, further comprising a sealing gap (40) between the case (20) and the cover (30) and in which another portion of the sealing member (50) is located,
wherein the sealing gap (40) comprises:
a first gap (41) between the first reference surface (25) and the cover (30); and
a second gap (42) between the partition wall (28) and the cover (30) and open toward the inside of the case body (21),
wherein:
the partition wall (28) is formed to have a height that is smaller than a depth of the first groove (26); and
the second gap (42) is formed to have a width which is a sum of a width of the first gap (41) and a width of a third gap (43) corresponding to a height difference between the first groove (26) and the partition wall (28).

8. The battery pack (1) as claimed in one of claims 2 to 7, wherein
the first groove (26) is recessed from the first reference surface (25) and has a first bottom surface (261), and
the second groove (27) has a smaller width than the first groove (26), is further recessed from the first bottom surface (261), and has a second bottom surface (271),
wherein the second groove (27) comprises:
a second outer surface (272); and
a second inner surface (273) facing the second outer surface (272) with the second bottom surface (271) interposed therebetween.

9. The battery pack (1) as claimed in claim 8, wherein at least one side of the second outer surface (272) and the second inner surface (273) is stepped in a form of steps,
wherein a recessed depth of the second groove (27) is greater than or equal to a width of the second bottom surface (271).

10. The battery pack (1) as claimed in one of claims 2 to 9, wherein the first coupling part (22) further comprises a relief groove (29) which is recessed from the first reference surface (25) and spaced apart from the first groove (26) and in which a portion of the sealing member (50) located between the first reference surface (25) and the cover (30) is arranged.

11. The battery pack (1) as claimed in claim 2, wherein the cover (30) comprises:
a cover body (31); and
a second coupling part (32) which is located on the cover body (31) and comprises a second reference surface (35) at a location facing the first reference surface (25), and a third groove (36) at a location facing the first groove (26).

12. The battery pack (1) as claimed in claim 11, wherein the second coupling part (32) comprises:
a plurality of second fastening parts (33) to which fastening members (60) are fastened and which are arranged along an edge of the cover body (31); and
a second sealing part (34) on which the sealing member (50) is located and in which the third groove (36) is recessed in a direction opposite to a direction of the first groove (26) and the second groove (27),
wherein the third groove (36) is formed to be recessed from the second reference surface (35) and comprises:
a third bottom surface (361);
a third outer surface (362); and
a third inner surface (363) facing the third outer surface (362) with the third bottom surface (361) interposed therebetween.

13. The battery pack (1) as claimed in claim 12, wherein at least one side of the third outer surface (362) and the third inner surface (363) is stepped in a form of steps.

14. The battery pack (1) as claimed in claim 11 or claim 12, wherein the second coupling part (32) further comprises a vent hole (37) passing through the cover body (31) and facing the first groove (26).

15. The battery pack (1) as claimed in one of claims 11 to 14, wherein the sealing member (50) comprises:
a first portion (51) located in the first groove (26);
a second portion (52) located in the second groove (27) and connected to the first portion (51);
a third portion (53) located in the third groove (36) and connected to the first portion (51); and
a fourth portion (54) located between the first reference surface (25) and the second reference surface (35) and connected to the first portion (51).
